# EUROPÄISCHE PATENTSCHRIFT

(11) **EP 4 163 238 B1**
(45) Veröffentlichungstag und Bekanntmachung des Hinweises auf die Patenterteilung: **12.03.2025**
(21) Anmeldenummer: 22199717.4
(22) Anmeldetag: 05.10.2022
(51) Int. Cl.: B65G 67/20, B65G 43/02, A01D 41/00, A01D 41/12, A01D 41/127, A01D 43/08, A01D 90/02, A01D 90/10

(54) **KOMPONENTE FÜR EINE MOBILE ARBEITSMASCHINE MIT EINER FÖRDEREINRICHTUNG**
COMPONENT FOR A MOBILE WORKING MACHINE WITH A CONVEYOR
COMPOSANT POUR UNE MACHINE DE TRAVAIL MOBILE COMPRENANT UN DISPOSITIF DE TRANSPORT

(30) Priorität: 06.10.2021 DE 102021125929
(43) Veröffentlichungstag der Anmeldung: 12.04.2023
(73) Patentinhaber: Maschinenfabrik Bernard Krone GmbH & Co. KG, 48480 Spelle (DE)
(72) Erfinder: Keuter, Jan, 49716 Meppen (DE)

(56) Entgegenhaltungen:
- EP-A1- 2 955 132
- EP-A2- 3 009 834
- CN-U- 212 424 507
- DE-U- 7 044 972
- KR-B1- 101 832 899
- US-A1- 2017 313 523

## Beschreibung

Die vorliegende Erfindung betrifft eine Komponente für eine mobile Arbeitsmaschine nach dem Oberbegriff des Patentanspruchs 1, ein Transportfahrzeug nach dem Oberbegriff des Patentanspruchs 10 sowie eine mobile Arbeitsmaschine nach dem Oberbegriff des Patentanspruchs 13 und 14.

In mobilen Arbeitsmaschinen werden Fördereinrichtungen zum Fördern von Material eingesetzt. Dabei werden beim Fördern Bauteile der Fördereinrichtungen durch das zu fördernde Transportgut beansprucht, sodass Abnutzungen an den durch das Transportgut beaufschlagten Flächen der Bauteile entstehen. Solch besonders stark beanspruchte Flächen ergeben sich beispielsweise bei der Bodenfläche eines Laderaums eines Transportfahrzeugs, bei der Kanalwand eines Auswurfbogens oder bei der Gehäusewand einer Fördertrommel einer selbstfahrenden Erntemaschine in der Art eines Feldhäckslers. Um einen Ausfall der Maschine zu vermeiden, sollten die Bauteile regelmäßig auf Abnutzungserscheinungen kontrolliert werden. Dabei erschwerend ist jedoch, dass oftmals die beanspruchten Flächen der Bauteile unzugänglich verbaut sind und/oder ein Ausbau zur Begutachtung zu aufwändig ist. Um Ausfälle der Arbeitsmaschine vorzubeugen, werden daher in der Praxis diese Bauteile in regelmäßigen Abständen oder nach einer festgelegten Zahl an Betriebsstunden der Arbeitsmaschine ersetzt. Dabei wäre es wirtschaftlicher, ein beanspruchtes Bauteil erst dann zu ersetzen, wenn es aufgrund von Abnutzungen unbrauchbar geworden ist und somit seine verschleißbedingt maximale Lebensdauer erreicht hat.

Die Druckschriften KR 101832899 B1, EP 3 009 834 A1 und CN 212424507 U offenbaren jeweils ein System zur Verschleißzustandserkennung einer Wand eines Rohres oder eines Förderschachtes.

Die Druckschrift KR 101832899 B1 offenbart darüber hinaus die Merkmale des Oberbegriffs des Anspruchs 1.

Aufgabe der Erfindung ist es daher eine Komponente für eine mobile Arbeitsmaschine zu schaffen, mit der der Zustand eines durch gefördertes Transportgut beanspruchten Bauteils bestimmbar ist, sodass ein Austausch und/oder eine Wartung des Bauteils zu einem wirtschaftlich optimalen Zeitpunkt planbar durchgeführt werden kann und Ausfallzeiten einer solchen mobilen Arbeitsmaschine vermieden werden.

Die Aufgabe wird gelöst mit einer Komponente für eine mobile Arbeitsmaschine mit den Merkmalen des Patentanspruchs 1, mit einem Transportfahrzeug nach den Merkmalen des Patentanspruchs 10 und mit einer mobilen Arbeitsmaschine nach den Merkmalen des Patentanspruchs 13 und 14. Vorteilhafte Ausführungsformen sind den abhängigen Ansprüchen entnehmbar.

Dafür wird eine Komponente für eine mobile Arbeitsmaschine geschaffen. Dabei kann die Komponente in einem Transportfahrzeug oder in einer mobilen Arbeitsmaschine verwendet werden.

Die Komponente umfasst eine Fördereinrichtung mit einem Fördermittel zum Führen und/oder Fördern von Transportgut in zumindest eine Förderrichtung und mit einem Förderraum, innerhalb dessen das Transportgut in zumindest eine der Förderrichtungen bewegbar ist. Dabei kann der Förderraum ein Laderaum eines Transportbehälters sein, in dem die Fördereinrichtung zum Fördern des Transportguts in den Laderaum hinein oder aus dem Laderaum heraus vorgesehen ist.

Bei einer Nutzung in einer mobilen Arbeitsmaschine kann der Förderraum auch ein von einem Schacht, Kanal oder Rohr umgrenzter Raum sein. In dieser Ausführungsform kann das Transportgut durch den Förderraum beispielsweise von einer Bearbeitungseinrichtung in ein Transportfahrzeug förderbar sein.

Die Komponente weist außerdem ein Flächenelement auf, das den Förderraum zumindest teilweise umgrenzt und eine dem Förderraum zugewandte, erste Oberfläche sowie eine dem Förderraum abgewandte, zweite Oberfläche aufweist. Dadurch ist das Flächenelement nur an der ersten Oberfläche durch das durch den Förderraum geförderte Transportgut beaufschlagt, sodass Abnutzungen an der ersten Oberfläche entstehen. Indessen ist die zweite Oberfläche, zumindest auf die Beaufschlagung durch das Transportgut bezogen, abnutzungsfrei.

Solche auf der ersten Oberfläche auftretbaren Abnutzungserscheinungen können beispielsweise Materialabtragungen, Riefen, Kratzspuren, Lochstellen, Risse, Verformungen oder dgl. Verschleißarten sein.

Da das Flächenelement den Förderraum begrenzt, ist zudem sein Zustand für den Förderbetrieb der Fördereinrichtung bedeutend. Durch ein zu stark abgenutztes Flächenelement ist die Funktionsfähigkeit der Fördereinrichtung beeinträchtigt, sodass folglich eine Beeinträchtigung der Arbeitsweise der Arbeitsmaschine oder sogar, wenigstens langfristig, ein Ausfall der Arbeitsmaschine droht. Dabei ist der Gedanke der Erfindung nicht nur auf eine bestimmte Bauart oder einen bestimmten Bautyp von Arbeitsmaschinen eingeschränkt. Insofern kann das Flächenelement beispielsweise teilweise oder vollständig einem Laderaum eines Transportfahrzeugs zugeordnet sein. Ebenso kann das Flächenelement einem Gehäuse einer Fördertrommel, einem Förderkanal und/oder einem Auswurfbogen einer Erntemaschine zugeordnet sein.

Weiterhin ist die zweite Oberfläche beabstandet zur ersten Oberfläche angeordnet. Ein Abstand zwischen der ersten Oberfläche und der zweiten Oberfläche entspricht somit einem Längen- oder Dickenmaß, gemessen zwischen der ersten und der zweiten Oberfläche. Bevorzugt sind dabei die erste und die zweite Oberfläche als sich gegenüberliegende, insbesondere ebene, Flächen ausgebildet. Beispielhaft kann die erste Oberfläche eine das Transportgut tragende, obere Oberfläche eines Bodens des Laderaums sein, während die zweite Oberfläche eine Unterseite des Bodens sein kann. In einer ebenso bevorzugten Ausführungsform können die erste und die zweite Oberfläche auch als gleichverlaufend kurvige und/oder gleichverlaufend gekrümmte, sich gegenüberliegende Flächen ausgebildet sein. So kann beispielsweise die erste Oberfläche der Innenseite eines gekrümmten Auswurfbogens einer Erntemaschine zugeordnet sein, währenddessen die zweite Oberfläche der Außenseite des Auswurfbogens zugeordnet sein kann.

Zur Bestimmung des Zustandes des durch gefördertes Transportgut beanspruchten Bauteils umfasst die Komponente eine Messeinrichtung, die der zweiten Oberfläche zugeordnet ist. Sie ist dazu eingerichtet, die räumliche Zuordnung der ersten Oberfläche zu der zweiten Oberfläche zu erkennen. Durch die Erkennung der räumlichen Zuordnung kann der Abstand zwischen der ersten und der zweiten Oberfläche bestimmt werden. Indes entspricht der bestimmte Abstand einer Materialdicke und/oder einer Materialstärke des Flächenelements. Daher werden die Begriffe Abstand, Materialdicke und Materialstärke synonym verwendet. Dabei ist die Verringerung des Abstands in einem abgenutzten Zustand des Flächenelements gegenüber einem abnutzungsfreien Zustand ein Maß für die Abnutzung, insbesondere für einen Materialschwund an der ersten Oberfläche des Flächenelements. Folglich ist es möglich, den Zustand des Flächenelements durch die Erkennung der räumlichen Zuordnung der ersten Oberfläche zu der zweiten Oberfläche zu bestimmen. Dadurch ist es möglich, die Notwendigkeit des Austausch des Flächenelements vorherzusehen und zu einem wirtschaftlich günstigen Zeitpunkt durchzuführen.

Erfindungsgemäß weist die Messeinrichtung einen Sensor auf, der von der zweiten Oberfläche einen definierten Sensorabstand aufweist. Dabei kann der Sensorabstand beispielsweise durch eine Kalibrierung und/oder durch ein konstruktives Gestaltungsmerkmal, wie beispielsweise eine mechanische Befestigung, definiert sein. Der Sensorabstand entspricht vorzugsweise einem Luftspalt von weniger als 1 mm.

Durch den Sensorabstand ist eine Erkennung der räumlichen Zuordnung der ersten Oberfläche gegenüber der zweiten Oberfläche berührungslos und/oder zerstörungsfrei. Eine zerstörungsfreie Prüfung des Flächenelements auf Abnutzungserscheinungen erfolgt, indem der Abstand zwischen den Oberflächen festgestellt wird. Durch den Sensor entstehen so keine Abnutzungen am Flächenelement. Dazu ist der Sensor bevorzugt als ein EMAT-Sensor (englisch, electromagnetic acoustic transducer) ausgebildet.

Dabei kann der Sensor in einer bevorzugten Ausführungsform ortsfest an der zweiten Oberfläche angeordnet sein. In einer besonders vorteilhaften Ausführungsform, bei der ein Bereich des Flächenelements mit der größten zu erwartenden Abnutzung bekannt ist, kann der Sensor in diesem Bereich angeordnet sein. Dadurch ist die Messeinrichtung mit wenigen Bauteilen konstruktiv einfach und kostengünstig ausführbar.

Gemäß einer weiteren bevorzugten Ausführungsform ist der Sensor entlang der zweiten Oberfläche lageveränderlich geführt. Dabei kann das Flächenelement gegenüber dem Sensor und/oder der Sensor gegenüber dem Flächenelement lageveränderlich angebracht sein. Die Messeinrichtung ist damit in der Lage, einen größeren Bereich auf Abnutzungen zu überprüfen.

Weiterhin bevorzugt ist der Sensor der Messeinrichtung an die zweite Oberfläche andrückbar ausgebildet. Dazu kann der Sensor gegen die Rückstellkraft einer Feder und/oder mit Hilfe der Rückstellkraft einer Feder an die zweite Oberfläche andrückbar sein. Dadurch ist sichergestellt, dass auch bei einer Lageveränderung des Sensors gegenüber dem Flächenelement und/oder bei einer Lageveränderung des Flächenelements gegenüber dem Sensor der definierte Sensorabstand gleich oder nahezu gleich bleibt.

Bevorzugt ist, dass der Sensor dazu eingerichtet ist, eine Materialmenge in einer Materialausdehnungsrichtung des Flächenelements zu erfassen. Dabei erstreckt sich die Materialausdehnungsrichtung vorzugsweise von der zweiten Oberfläche aus zur ersten Oberfläche hin und damit vom Sensor weg. Durch die Erfassung der Materialmenge ist es möglich, eine Materialdicke des Flächenelements an der lokalen Prüfstelle zu ermitteln. Dabei ist es bevorzugt, dass der Sensor die Materialmenge an einer lokalen Prüfstelle, d. h. insbesondere punktuell, erfasst. Dadurch ist die räumliche Zuordnung der ersten zur zweiten Oberfläche, insbesondere an der lokalen Prüfstelle, erkennbar. Ferner ist es dadurch möglich, in einem Vergleich der erfassten Materialmenge und/oder Materialdicke mit einer Materialmenge und/oder Materialdicke des Flächenelements in einem nicht abgenutzten Zustand, den Verschleiß des Flächenelements lokal zu bestimmen. Dabei erfolgt die Erfassung bevorzugt von einer dem Sensor gegenüberliegenden, lokalen Prüfstelle auf der zweiten Oberfläche.

Bevorzugt erzeugt der Sensor ein Magnetfeld sowie wenigstens ein elektrisches Wechselfeld. Das Magnetfeld ist vorzugsweise durch einen Permanentmagneten erzeugbar. Zur Erzeugung des elektrischen Wechselfeldes weist der Sensor bevorzugt einen elektrischen Leiter, wie beispielsweise einen Draht, auf. Dadurch wirkt das elektrische Wechselfeld mit dem Magnetfeld nach dem Prinzip der elektromagnetisch-akustischen Wandlung, sodass bei einer Durchdringung eines metallischen und/oder ferromagnetischen Gegenstands durch das Magnet- und das elektrische Wechselfeld im durchdrungenen Gegenstand eine Lorentzkraft auftritt, durch die in diesem Gegenstand Schwallwellen erzeugt werden.

Mithin ist das Flächenelement an der zweiten Oberfläche durch den Sensor mit Schallwellen beaufschlagbar, sodass dadurch eine Erkennung des Abstands zwischen der ersten Oberfläche und der zweiten Oberfläche erreichbar ist. Dazu ist der Sensor vorzugsweise derart an der zweiten Oberfläche angeordnet, dass das vom Sensor erzeugte Magnetfeld und das elektrische Wechselfeld das Flächenelement an der zweiten Oberfläche durchdringen. Das Flächenelement ist dazu bevorzugt metallisch und/oder ferromagnetisch ausgebildet. Dadurch werden im Messbetrieb des Sensors, insbesondere hochfrequente, Schallwellen oberflächennah im Flächenelement erzeugt, die sich im Wesentlichen von der zweiten Oberfläche in Materialausdehnungsrichtung zur ersten Oberfläche hin ausbreiten.

Prinzipbedingt erzeugen die sich im Flächenelement ausbreitenden Schwallwellen vom Sensor erfassbare elektrische Wirbelströme. Dabei induzieren die elektrischen Wirbelströme im Sensor eine elektrische Wechselspannung. Der Spannungswert der Wechselspannung ist dann ein Maß für die Materialmenge zwischen der ersten und der zweiten Oberfläche, sodass eine Erkennung des Abstands zwischen der ersten Oberfläche und der zweiten Oberfläche möglich ist. Dabei kann auch alternativ zum Spannungswert die Stromstärke der Wirbelströme erfasst werden und ein Maß für die Materialmenge darstellen. Es ist ein Vorteil des Sensors, dass die Messung auch bei rauen, unebenen, verschmutzten, oxidierten und/oder, lackierten Oberflächen erfolgen kann, sodass ein Einsatz des Sensors auch im Betrieb einer Komponente einer Arbeitsmaschine möglich ist, die in einer stark schmutzanfälligen Umgebung eingesetzt ist. Ein weiterer Vorteil entsteht dadurch, dass die Messung erfolgen kann, ohne das Flächenelement anzugreifen, zu schädigen und/oder zu zerstören.

Zur Erfassung der Wechselspannung weist der Sensor vorzugsweise einen elektrischen Leiter auf. Besonders bevorzugt wird der Spannungswert der induzierten Wechselspannung und/oder die Stromstärke des induzierten Wechselstromes vom elektrischen Leiter erfasst, der auch das elektrische Wechselfeld erzeugt. Dadurch ist der Sensor mit nur wenigen Bauteilen realisierbar, sodass er kostengünstig herstellbar ist.

Die Komponente weist vorzugsweise eine Steuereinrichtung auf, die zum Empfang und/oder zur Verarbeitung eines Messsignals der Messeinrichtung vorgesehen ist. Dabei ist bevorzugt, dass das Messsignal zumindest Messdaten über den Zustand, insbesondere über den Abstand zwischen der ersten und der zweiten Oberfläche und/oder über die Materialdicke des Flächenelements, umfasst. Außerdem ist es bevorzugt, dass die Steuereinrichtung die Messdaten des Messsignals zeitlich markiert und abspeichert. Dabei ist vorgesehen, dass die Messdaten über eine Benutzerschnittstelle der Steuereinrichtung auslesbar und/oder abrufbar sind. Dadurch ist eine zuverlässige Überwachung des Zustands des Flächenelements anhand des Abstands zwischen der ersten und zweiten Oberfläche eingerichtet.

In einer bevorzugten Ausführungsform ist die Steuereinrichtung zudem zum Senden eines Steuersignals und/oder eines Anzeigesignals vorgesehen. Dabei ist das Steuersignal dazu vorgesehen, mindestens einen Aktor, der beispielsweise der Fördereinrichtung zugeordnet ist, zu steuern und/oder zu regeln.

Bevorzugt ist außerdem, dass eine Anzeigeeinheit dazu vorgesehen ist, das Anzeigesignal zu empfangen und/oder einem Maschinenbediener der Arbeitsmaschine Anzeigedaten des Anzeigesignals wiederzugeben. Zur Information des Bedieners umfassen die Anzeigedaten des Anzeigesignals zumindest die Messdaten der Messeinrichtung. Ebenso bevorzugt können die Anzeigedaten alternativ oder zusätzlich weitere Daten der Arbeitsmaschine umfassen, wie beispielsweise Förderbetriebsdaten der Fördereinrichtung. Es kann so dem Bediener neben dem Zustand des Flächenelements, zum Beispiel eine Fördergeschwindigkeit des Transportguts, eine Antriebsdrehzahl eines Förderantriebs der Fördereinrichtung und/oder eine Durchflussmenge des Transportguts angezeigt werden. Der Bediener kann dadurch den Förderbetrieb der Fördereinrichtung optimal einschätzen und/oder auf den Zustand des Flächenelements einstellen, sodass eine Überlastung des Flächenelements verhindert wird. Dadurch kann ein Bediener der mobilen Arbeitsmaschine den Zustand des Flächenelements auf der Anzeigeeinheit einsehen, sodass ein Austausch und/oder eine Wartung des Flächenelements bei zu geringer Materialdicke planbar erfolgen kann.

Weitergehend ist bevorzugt, dass die Steuereinrichtung dazu eingerichtet ist, bei Unterschreitung eines kritischen Abstands zwischen der ersten Oberfläche und der zweiten Oberfläche ein Warnsignal auszugeben. Dabei kann der kritische Abstand vorzugsweise so definiert sein, dass bei seiner Unterschreitung, ein Defekt an der Komponente zu erwarten ist. Durch das Warnsignal kann dann der Bediener den Betrieb der Arbeitsmaschine und/oder der Fördereinrichtung anhalten, sodass ein Ausfall der Arbeitsmaschine zuverlässig verhindert wird. Alternativ oder zusätzlich kann ein automatisches Anhalten bei Unterschreitung des kritischen Abstands durch die Steuereinrichtung vorgesehen sein. Auf die Warnung hin kann der Bediener den Austausch und/oder die Wartung des Flächenelements so planen und einleiten, dass Ausfallzeiten nicht eintreten.

Die Aufgabe wird ebenfalls gelöst mit einem Transportfahrzeug mit einer solchen Komponente. Das Transportfahrzeug kann dabei als ein Ladewagen, ein Auflieger, ein Kippanhänger oder dgl. ausgebildet sein. Indes kann das Zugfahrzeug ein Schlepper, Lastkraftwagen oder dgl. sein.

In dieser Anwendung der Erfindung ist der Förderraum als ein Transportbehälter ausgeführt. Zudem ist das Flächenelement bevorzugt als eine Bodenwand ausgeführt, die zum Be- oder Entladen des Transportbehälters eingerichtet ist.

Bevorzugt ist dabei, dass die Fördereinrichtung Schiebebodenprofile umfasst, die in Förderrichtung translatorisch angetrieben bewegbar angebracht sind, und die an der Bodenwand angeordnet sind. Durch die Schiebebodenprofile ist das Transportgut aus dem Transportbehälter heraus, in den Transportbehälter hinein und/oder innerhalb des Transportbehälters in zumindest eine Förderrichtung förderbar. Dazu sind die Schiebebodenprofile quer zur Förderrichtung aneinandergereiht angeordnet und bilden so einen die Bodenwand im Wesentlichen überdeckenden Schiebeboden.

Außerdem sind die Schiebebodenprofile vorzugsweise jeweils zueinander verfahrbar. Zur Förderung werden bevorzugt alle Schiebebodenprofile gleichzeitig in Förderrichtung verfahren, und anschließend einzeln nacheinander entgegen der Förderrichtung wieder zurückgefahren. Dabei verschieben und/oder fördern die Schiebebodenprofile in einer gemeinsamen Vorschubbewegung das Transportgut in Förderrichtung, während in einer zeitlich nacheinander erfolgenden Rückschubbewegung jedes einzelnen Schiebebodenprofils das Transportgut gar nicht oder gegenüber der Vorschubbewegung nur minimal verschoben und/oder gefördert wird. Das Transportgut wird somit in Förderrichtung gefördert.

Bei der Förderung entstehen durch das Verschieben des Transportguts und/oder durch das Rückschubgleiten der Profile unter dem Transportgut Abnutzungen an diesen. Die Messeinrichtung ist daher bevorzugt dazu vorgesehen, den Zustand der Schiebebodenprofile zu erfassen. Dazu ist besonders bevorzugt, dass eines der Schiebebodenprofile zumindest teilweise das Flächenelement ausbildet.

Der Sensor der Messeinrichtung ist ferner bevorzugt an einem Rahmen der Arbeitsmaschine unterhalb des Transportbehälters angeordnet. Er weist außerdem bevorzugt zumindest eine Laufrolle auf, die zum Abrollen entlang des Schiebebodenprofils des Schiebebodens vorgesehen ist. Dadurch gleitet das Schiebebodenprofil an der Laufrolle der Messeinrichtung ohne Beeinträchtigung des Förderbetriebs ab. Ferner ist durch die Laufrolle der Spaltabstand des Sensors zur zweiten Oberfläche an der Bodenwand definiert.

Die Aufgabe wird zudem gelöst mit einer Arbeitsmaschine, die als eine Kombination aus einem Zugfahrzeug und einem solchen Transportfahrzeug ausgebildet ist. Das Zugfahrzeug weist dabei einen Fahrantrieb zum Antreiben von Bodeneingriffsmitteln, wie beispielsweise Rädern, Raupen oder dgl. auf Boden.

Außerdem wird die Aufgabe gelöst mit einer Arbeitsmaschine, die als eine Erntemaschine ausgebildet ist, mit einer solchen Komponente. Dabei ist die Arbeitsmaschine bevorzugt eine selbstfahrende Erntemaschine in der Art eines Feldhäckslers. Sie weist bevorzugt einen Fahrantrieb zum Antreiben von Bodeneingriffsmitteln, wie beispielsweise Rädern, Raupen oder dgl. auf.

Die Erntemaschine kann aber auch in der Art einer von einem Zugfahrzeug gezogenen Erntemaschine, wie beispielsweise eines Häckselwagens oder einer Ballenpresse, ausgeführt sein.

In dieser Anwendung der Erfindung ist die Fördereinrichtung der Arbeitsmaschine einem Verarbeitungsaggregat zur Zerkleinerung und/oder Förderung von Erntegut in Förderrichtung nachgeordnet und umfasst einen Auswurfbogen zur Überführung des Transportguts auf ein Transportfahrzeug.

Dabei weist der Auswurfbogen das Flächenelement auf, durch den das Transportgut gefördert wird. Gemäß einer ebenso bevorzugten Ausführungsform bildet das Flächenelement alternativ oder zusätzlich zumindest teilweise eine Gehäusewand des Verarbeitungsaggregats und/oder eine Kanalwand eines Förderkanals der Arbeitsmaschine aus.

Dabei entstehen bei der Förderung des Ernteguts Abnutzungen durch das Entlanggleiten des Ernteguts am Flächenelement. Insbesondere ist an den gekrümmten Stellen des Auswurfbogens und/oder an den Stellen der Gehäusewand und/oder Kanalwand eine Abnutzung durch das Erntegut festzustellen.

Bevorzugt ist ferner die Messeinrichtung entlang des Auswurfbogens verfahrbar ausgebildet. Dazu weist die Arbeitsmaschine vorzugsweise einen Aktor auf, der die Messeinrichtung verstellt, insbesondere verschiebt und/oder verschwenkt. Dazu ist an einer Außenseite des Auswurfbogens ein Führungsmittel zur Führung der Messeinrichtung angeordnet. Dadurch ist die Messeinrichtung entlang des Auswurfbogens vom Aktor geführt verfahrbar, sodass ein größerer Bereich des Auswurfbogens von der Messeinrichtung erfassbar ist. Dabei ist durch das Führungsmittel der Spaltabstand des Sensors zur zweiten Oberfläche des Flächenelements am Auswurfbogen definiert.

Bevorzugt ist, dass das Messsignal an eine Anzeigeeinheit gesendet wird, die in einer Fahrerkabine der Arbeitsmaschine angeordnet ist. Die Anzeigeeinheit kann jedoch ebenso als ein mobiles Gerät ausgeführt sein, sodass der Bediener dieses stets mit sich führen kann. Dabei sind das Messsignal, das Steuersignal und/oder das Anzeigesignal vorzugsweise über einen Datenbus und/oder über eine drahtlose Verbindung übertragbar. Dadurch ist eine ständige und/oder ortsunabhängige Überwachung möglich.

Im Folgenden wird die Erfindung anhand von Figuren beschrieben.

Es zeigen
- Fig. 1: schematisch eine mobile Arbeitsmaschine, die als eine Kombination aus einem Transportfahrzeug und einem Zugfahrzeug ausgebildet ist;
- Fig. 2: schematisch einen Förderraum der mobilen Arbeitsmaschine aus Fig. 1 in einer perspektivischen Ansicht;
- Fig. 3: schematisch die Messeinrichtung in einer Schnittdarstellung unterhalb eines Schiebebodenprofils der mobilen Arbeitsmaschine aus Fig. 2; und
- Fig. 4: jeweils in (a) und in (c) schematisch eine Ausführungsform einer mobilen Arbeitsmaschine, die als Erntemaschine ausgebildet ist, und in (b) die Messeinrichtung an einem Auswurfbogen der Arbeitsmaschine.

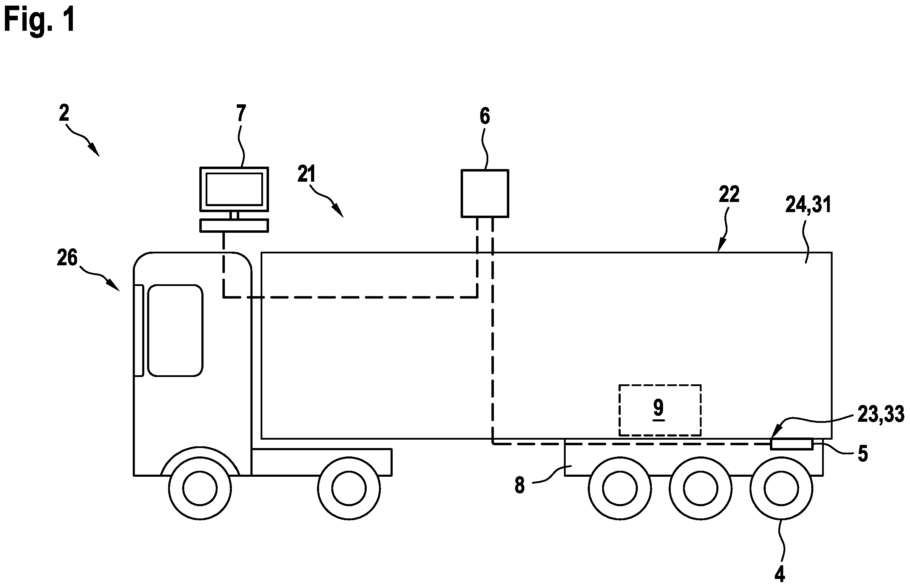

Fig. 1 zeigt schematisch eine mobile Arbeitsmaschine 2, die hier als eine Kombination aus einem Transportfahrzeug 21 und einem Zugfahrzeug 26 ausgeführt ist. Dabei weist die Arbeitsmaschine 2 eine Komponente im Sinne der Erfindung auf. Sie weist zur Fortbewegung Bodeneingriffsmittel 4 auf, die über einen Fahrantrieb (nicht dargestellt) antreibbar sind. Außerdem weist die Arbeitsmaschine 2 einen Transportbehälter 22 auf, der zum Transport von Transportgut 9 vorgesehen ist und von einem Fahrzeugrahmen 8 der Arbeitsmaschine 2 getragen wird. Dazu kann ein Laderaum 24 des Transportbehälters 22 mit Transportgut 9 beladen und entladen werden.

Des Weiteren weist die Arbeitsmaschine 2 eine Messeinrichtung 5 auf, die an einer Bodenwand 23 des Transportbehälters 22 angeordnet ist. Sie ist dazu vorgesehen, den Zustand eines Flächenelements 33 zu erfassen, das den Transportbehälter 22 zumindest zum Teil ausbildet, und folglich den Laderaum 24 teilweise umgrenzt.

Dabei sendet die Messeinrichtung 5 ein Messsignal mit Messdaten an eine Steuereinrichtung 6 der Arbeitsmaschine 2. Die Steuereinrichtung 6 ist dazu eingerichtet, Informationen über den Zustand des Flächenelements 33 aus dem Messsignal zu verarbeiten und abhängig davon ein Anzeigesignal mit Anzeigedaten an eine Anzeigeeinheit 7 zu versenden. Durch die Anzeigeeinheit 7 sind die in den Anzeigedaten enthaltenen Informationen einem Bediener der Arbeitsmaschine 2 darstellbar. Diese Informationen umfassen den Zustand des Flächenelements 33. Ferner können sie zusätzlich oder alternativ auch Daten von weiteren, in Fig. 1 nicht dargestellten, Aggregaten, Aktoren und/oder Sensoren der Arbeitsmaschine 2 wiedergeben. Beispielsweise kann es sich bei den Informationen um eine Fahrgeschwindigkeit der Arbeitsmaschine 2, um eine Antriebsdrehzahl des Fahrantriebs und/oder eines Aggregats, um einen Füllstand des Transportbehälters 22, und/oder um ein Ladegewicht des Transportbehälters 22 handeln.

Außerdem kann die Steuereinrichtung 6 dazu eingerichtet sein, weitere Signale zu versenden. Eines dieser Signale kann beispielsweise ein Warnsignal sein, das bei Erkennung eines kritischen Zustands des Flächenelements 33 ausgegeben wird. Ein weiteres Signal kann auch ein Steuersignal sein, das den Betrieb eines Aggregates und/oder eines Aktors in Abhängigkeit des Messsignals steuert und/oder regelt.

Zur Signalübertragung sind die Messeinrichtung 5, die Steuereinrichtung 6, die Anzeigeeinheit 7 und/oder die weiteren Aggregate, Aktoren und/oder Sensoren, über eine drahtlose Verbindung und/oder einen Datenbus miteinander verbunden. Abweichend von der dargestellten Ausführungsform kann die Anzeigeeinheit 7 auch direkt mit der Messeinrichtung 5 verbunden sein. Die Anzeigeeinheit 7 ist dann dazu eingerichtet, die Anzeigedaten in Abhängigkeit des Messsignals und/oder des Warnsignals anzuzeigen.

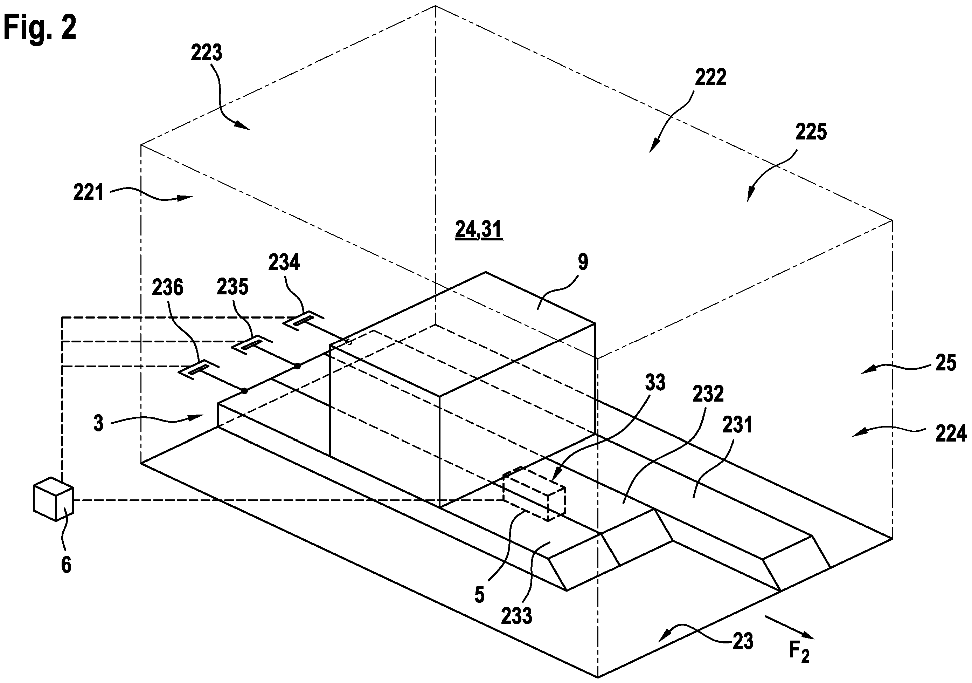

Fig 2. zeigt schematisch den Laderaum 24 der mobilen Arbeitsmaschine 2 aus Fig. 1. Dabei ist der Laderaum 24 der Arbeitsmaschine 2 in dem dargestellten Ausführungsbeispiel ein Förderraum 31 einer Komponente im Sinne der Erfindung. Er ist zudem begrenzt durch eine horizontal ausgerichtete Bodenwand 23 sowie vertikal ausgerichtete Behälterwände 221, 222, 223, 224 des Transportbehälters 22.

Eine optionale Deckenwand 225 des Transportbehälters 22 umgrenzt den Förderraum 31 zusätzlich nach oben hin. Dabei kann die Deckenwand 225 öffnend und schließend ausgebildet sein, sodass der Transportbehälter 22 durch eine andere Maschine (nicht dargestellt), wie beispielsweise eine Erntemaschine oder einen Kran von oben be- und entladbar ist.

Aus Gründen einer verbesserten Übersicht ist hier nicht näher gezeigt, dass die an einer Rückseite 25 der Arbeitsmaschine 2 angeordnete Behälterwand 224 schließend und öffnend ausgebildet ist, sodass der Transportbehälter 22 an der Rückseite 25 geschlossen oder geöffnet sein kann. So kann der Transportbehälter 22 für den Straßentransport des Transportguts 9 in den geschlossen Zustand überführbar sein und zum Beladen und/oder Entladen in den geöffneten Zustand überführbar sein, in dem das Transportgut 9 durch die entstandene Öffnung an der Rückseite 25 aufnehmbar und entnehmbar ist.

Zum Be- und Entladen des Transportbehälters 22 weist die Arbeitsmaschine 2 außerdem eine Fördereinrichtung 3 auf, durch die das Transportgut 9 in und/oder entgegen einer Förderrichtung F2 förderbar ist. Dabei kann das in der Fig. 2 vereinfacht dargestellte Transportgut 9 beispielsweise stapelbares Gut, Paletten, Schüttgut und/oder Erntegut sein.

Zur Förderung des Transportguts 9 umfasst die Fördereinrichtung 3 eine Vielzahl Schubbodenprofile 231, 232, 233, an denen jeweils ein Schubaktor 234, 235, 236 angreift. Durch die Schubaktoren 234, 235, 236 können die Schubbodenprofile 231, 232, 233 sowohl in als auch gegen die Förderrichtung F2 bewegt werden. Dabei sind sie gegenüber der Bodenwand 23 sowie zueinander beweglich ausgebildet, sodass sie über der Bodenwand 23 hinweg sowie aneinander vorbei gleiten.

Um das Transportgut 9 in Förderrichtung F2, d.h. aus dem Transportbehälter 22 heraus zu fördern, werden in einem ersten Schritt alle Schubaktoren 234, 235, 236 gleichzeitig betätigt, sodass alle Schubbodenprofile 231, 232, 233 zeitgleich in Förderrichtung F2 bewegt werden. Bei der Bewegung der Schubbodenprofile 231, 232, 233 wird das auf ihnen aufliegende Transportgut 9 mitgenommen und folglich in Förderrichtung F2 gefördert. Anschließend werden in einem zweiten Schritt die Schubaktoren 234, 235, 236 jeweils einzeln nacheinander betätigt, sodass die Schubbodenprofile 231, 232, 233 einzeln und nacheinander entgegen der Förderrichtung F2 zurückbewegt werden. Bei der Rückschubbewegung gleiten die Schubbodenprofile 231, 232, 233 einzeln unter dem Transportgut 9 hinweg, ohne dieses mitzunehmen oder die einzelnen Schubbodenprofile 231, 232, 233 nehmen das Transportgut 9 nur minimal mit. Da eine Mitnahme des Transportguts 9 entgegen der Förderrichtung F2 nach der einzelnen Rückschubbewegung aller Schubbodenprofile 231, 232, 233 kleiner ist als eine Mitnahme des Transportguts 9 bei der zeitgleichen Vorwärtsbewegung aller Schubbodenprofile 231, 232, 233, wird somit das Transportgut 9 in Förderrichtung F2 gefördert.

Zur Förderung des Transportguts 9 entgegen der Förderrichtung F2, d.h. in den Transportbehälter 22 hinein, werden die Schritte zur Betätigung der Schubaktoren 234, 235, 236 in entgegengesetzter Richtung ausgeführt, sodass die Profile 231, 232, 233 erst jeweils einzeln und nacheinander in Förderrichtung F2 bewegt werden und darauffolgend zeitgleich und gemeinsam entgegen der Förderrichtung F2 zurückbewegt werden.

Abweichend zur in Fig. 2 vereinfachten Darstellung ist es vorteilhaft, dass die Fördereinrichtung 3 statt drei Schubbodenprofilen 231, 232, 233 und drei Schubaktoren 234, 235, 236 eine beliebige Anzahl Schubbodenprofile 231, 232, 233 und/oder Schubaktoren 234, 235, 236 aufweist. Überdies sind die Schubbodenprofile 231, 232, 233 aneinandergereiht angeordnet und decken die Bodenwand 23 in Ihrer Breite vollständig ab. Außerdem ist es möglich, dass die Schubbodenprofile 231, 232, 233 in Gruppen aufgeteilt sind, und jede der Gruppen jeweils einem Schubaktor 234, 235, 236 zugeordnet ist.

Die Schubaktoren 234, 235, 236 sind in der Fig.2 als vereinfacht dargestellte pneumatische oder hydraulische Zylinder gezeigt. In einer vorteilhaften Ausbildung können die Schubaktoren 234, 235, 236 allerdings auch als elektrische Aktoren ausgebildet sein.

Beim Fördern des Transportguts 9 durch die Profile 231, 232, 233, entstehen an diesen Abnutzungen durch die Gleitbewegungen der Profile 231, 232, 233 aneinander, an der Bodenwand 23 und/oder am Transportgut 9. Zur Erfassung des Zustands der Profile 231, 232, 233 und/oder der Bodenwand 23 ist die Messeinrichtung 5 vorgesehen. Dazu ist sie an einer dem Förderraum 31 abgewandten Seite des Transportbehälters 22 unterhalb eines Schubbodenprofils 232 angeordnet, sodass sie in der Lage ist, ein Flächenelement 33 des Profils 232 zu erfassen.

In der in Fig. 2 dargestellten Ausführungsform ist die Messeinrichtung 5 dem mittleren Schubbodenprofil 232 zugeordnet, da mittig des Förderraums 31 die höchste Belastung zu erwarten ist. Es ist jedoch auch eine Anordnung der Messeinrichtung 5 an einem anderen Profil 231, 233 und/oder an der Bodenwand 23 möglich. Außerdem ist es auch möglich, dass eine oder mehrere Messeinrichtungen 5 jeweils den Profilen 231, 232, 233 und/oder der Bodenwand 23 zugeordnet sind.

Überdies ist die Messeinrichtung 5 mit der Steuereinrichtung 6 durch eine kabellose und/oder kabelgebundene Datenverbindung verbunden. Dabei überträgt sie an die Steuereinrichtung 6 das Messsignal, welches Messdaten über den Zustand des Flächenelements 33 umfasst. Die Steuereinrichtung 6 ist ferner in der Lage, die Schubaktoren 234, 235, 236 durch ein Steuersignal zu betätigen. Hierbei kann die Steuereinrichtung 6 eine Verfahrgeschwindigkeit der Schubbodenprofile 231, 232, 233, das heißt auch eine Fördergeschwindigkeit des Transportguts 9, steuern. Folglich kann die Steuereinrichtung 6 dadurch auch den Förderbetrieb der Fördereinrichtung 3 einstellen. Dadurch kann der Förderbetrieb durch die Steuereinrichtung 6 auch in Abhängigkeit des Messsignals eingestellt werden.

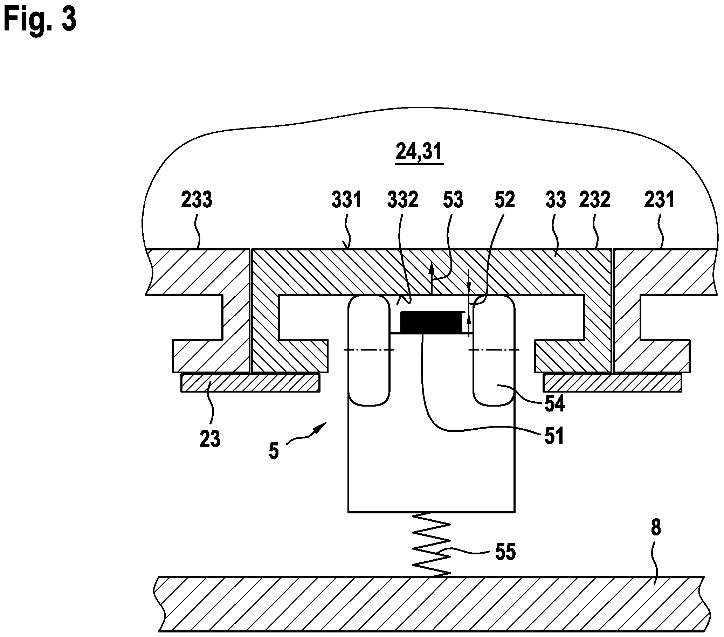

Fig 3 zeigt schematisch die Messeinrichtung 5 aus Fig. 2. Diese ist in dem gezeigten Ausführungsbeispiel einem Flächenelement 33 eines der Schubbodenprofile 231, 232, 233 aus Fig. 2 zugeordnet. Dabei weist das Flächenelement 33 eine dem Transportgut 9 zugewandte, erste Oberfläche 331 und eine dem Transportgut 9 abgewandte, zweite Oberfläche 332 auf.

Die Messeinrichtung 5 ist dazu eingerichtet, den Zustand des Flächenelements 33 mit Hilfe einer zerstörungsfreien Messung zu bestimmen. Dazu ist sie an der zweiten Oberfläche 332 angeordnet. Zudem weist sie dazu einen Sensor 51 auf, der in einem definierten Sensorabstand 52 von der zweiten Oberfläche 332 beabstandet ist.

Der Sensor 51 ist, hier vereinfacht dargestellt, als ein elektromagnetisch-akustischer Wandler ausgebildet. Über einen Permanentmagneten (nicht dargestellt) erzeugt er ein Magnetfeld, das das metallische und/oder ferromagnetische Material des Flächenelements 33 durchdringt. Gleichzeitig erzeugt er im Flächenelement 33 über einen elektrischen Leiter (nicht dargestellt) ein elektrisches Wechselfeld, das in Wechselwirkung mit dem Magnetfeld Schallwellen im Flächenelement 33 erzeugt. Die Schallwellen bewirken Änderungen des elektrischen Wechselfeldes, wodurch eine Wechselspannung im elektrischen Leiter induziert wird. Dabei ist die induzierte Wechselspannung ein Maß für die Materialmenge des Flächenelements 33 in einer Materialausdehnungsrichtung 53. Diese erstreckt sich von der zweiten Oberfläche 332 ausgehend in Richtung vom Sensor 51 weg zur ersten Oberfläche 331 hin.

Somit sind durch Erfassung der Materialmenge des Flächenelements 33 Abnutzungen und/oder Schwachstellen in diesem erkennbar, wie beispielsweise Risse, Löcher und/oder Rostbefall. Außerdem ist durch Erfassung der Materialmenge ein Abstand der zweiten Oberfläche 332 zur ersten Oberfläche 331 bestimmbar. Das bedeutet ferner, dass eine Materialdicke des Flächenelements 33 bestimmbar ist. Dabei kann die bestimmte Materialdicke mit der Materialdicke eines ungenutzten Flächenelements 33 verglichen werden, sodass eine Materialabtragung an der ersten Oberfläche 331 bestimmbar ist. Folglich ist so zusätzlich oder alternativ zur Erkennung von Schwachstellen der Verschleißzustand des Flächenelements 33 bestimmbar.

Die Messeinrichtung 5 weist überdies Laufrollen 54 auf, an denen das Profil 231, 232, 233 bei einer Vorschub- oder Rückschubbewegung geführt wird. Durch die Anbringung der Laufrollen 54 an der Messeinrichtung 5 ist zudem der Sensorabstand 52 zwischen Sensor 51 und zweiter Oberfläche 332 definiert.

Abweichend von der dargestellten Ausführungsform ist es auch möglich, dass die Messeinrichtung 5 statt Laufrollen 54 ein Gleitelement und/oder eine Kugelrolle aufweist, über die der Sensorabstand 52 definiert ist und/oder an dem das das Profil 231, 232, 233 abgleitet und/oder geführt wird.

Außerdem ist die Messeinrichtung 5 an das Flächenelement 33 andrückbar. Dazu ist hier eine Feder 55 dargestellt, die dazu an einem Rahmen 8 der mobilen Arbeitsmaschine 2 angebracht ist. Durch die Feder 55 wird eine Druckkraft auf die Messeinrichtung 5 ausgeübt, sodass die Laufrollen 54 am Flächenelement 33 angedrückt sind und ein durchgängiger Kontakt der Laufrollen 54 zum Flächenelement 33 besteht. Somit ist sichergestellt, dass der Sensorabstand 52 während des Abrollens des Flächenelements 33 gleichbleibend ist.

Statt einer Feder 55 kann dabei ebenso gut ein elastisches Element aus Kunststoff und/oder Metall verwendet werden. Alternativ kann auch eine einen steuerbaren Aktor und einen Abstandssensor umfassende Regelung verwendet werden, die den Sensorabstand 52 des Sensors 51 zum Flächenelement 33 regelt oder steuert.

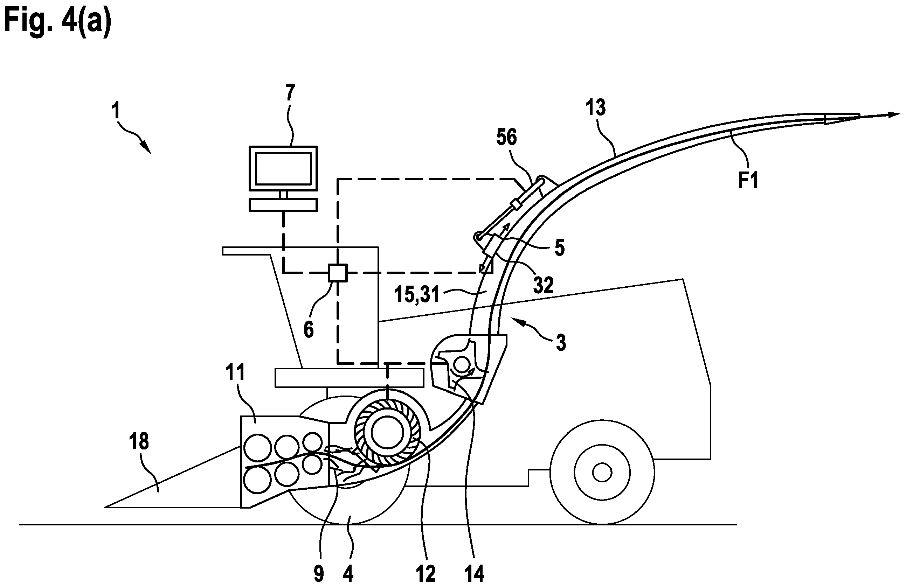

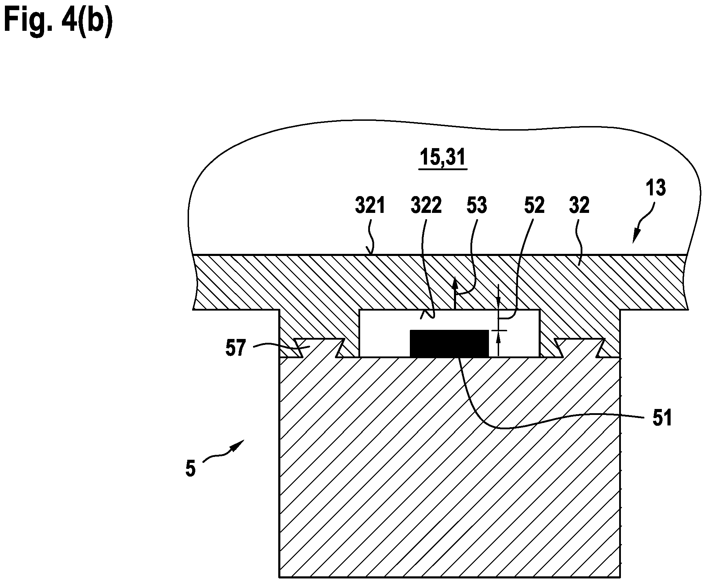

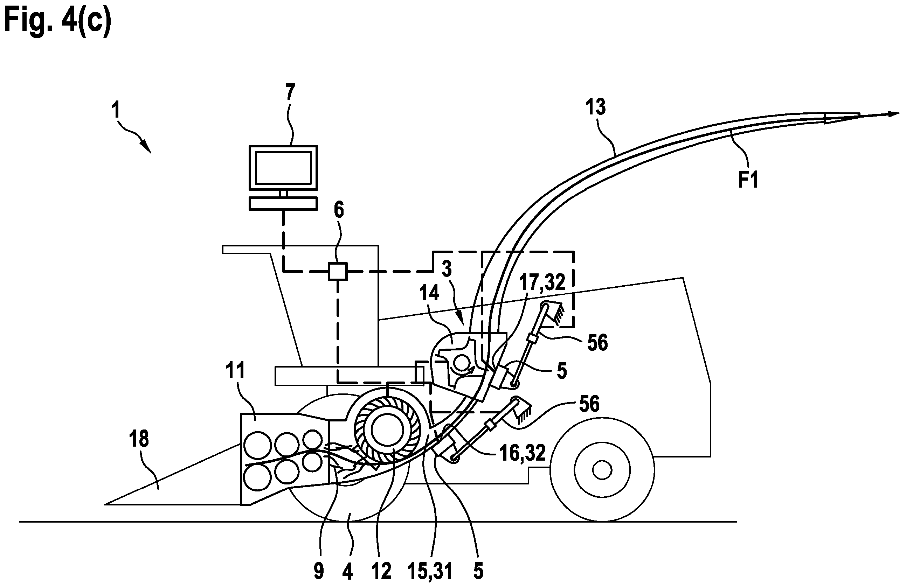

Fig. 4 zeigt in (a) eine als Erntemaschine 1 ausgebildete mobile Arbeitsmaschine 1. Diese weist einen Einzug 11 zum Einziehen und Zuführen von Erntegut an eine Fördereinrichtung 3, die zum Führen und/oder Fördern des Ernteguts 9 in eine Förderrichtung F1 vorgesehen ist. Dabei ist ein Vorsatz 18, wie beispielsweise ein Maisgebiss oder eine Pick-up, zum Ernten und/oder Aufnehmen des Ernteguts 9 an der Arbeitsmaschine 1 vorgesehen. Indes ist Erntegut 9 als das Transportgut 9 im Sinne der Erfindung aufzufassen. Außerdem weist die Fördereinrichtung 3 dieser Ausführungsform einen Förderkanal 15 auf, der ein Förderraum 31 einer Komponente im Sinne der Erfindung ist.

Der Förderkanal 15 ist dabei einem Verarbeitungsaggregat 12 zur Zerkleinerung und/oder Förderung von Erntegut 9 in Förderrichtung F1 nachgeordnet. Dabei ist das in der Fig. 4 gezeigte Verarbeitungsaggregat 12 als Häckseltrommel ausgeführt. Es kann aber auch ebenso gut eine Fördertrommel und/oder ein Konditionierer vorgesehen sein. Weitergehend in Förderrichtung F1 ist dem Verarbeitungsaggregat 12 ein Beschleunigungsaggregat 14, das zur Beschleunigung des Ernteguts 9 vorgesehen ist, und ein Auswurfbogen 13 nachgeordnet. Dabei ist der Auswurfbogen 13 zum Auswerfen und Überführen des Ernteguts 9 auf ein, in der Figur 4 nicht dargestelltes, Transportfahrzeug vorgesehen.

In dem in Fig. 4 dargestellten Ausführungsbeispiel ist das Beschleunigungsaggregat 14 als ein Wurfbeschleuniger ausgeführt. Abweichend davon kann das Beschleunigungsaggregat 14 auch als Fördertrommel oder als Gebläse ausgeführt sein.

Das Verarbeitungsaggregat 12 und/oder das Beschleunigungsaggregat 14 sind antreibbar, um das Erntegut 9 zu beschleunigen und durch den Förderkanal 15 zu fördern. Durch das Erntegut 9 entstehen dabei Abnutzungen an den Innenwänden des Förderkanals 15. Im Besonderen sind die Abnutzungen im Auswurfbogen 13 aufgrund dessen Krümmungen hoch. In dem dargestellten Beispiel ist die Messeinrichtung 5 daher einem Flächenelement 32 zugeordnet, das den Auswurfbogen 13 zumindest teilweise ausbildet. Dazu ist die Messeinrichtung 5 an einer dem Erntegut 9 abgewandten Seite des Auswurfbogens 13 angebracht. Durch die Messeinrichtung 5 sind die Abnutzungen und/oder der Zustand des Flächenelements 32 des Auswurfbogens 13 erfassbar. Überdies greift ein Aktor 56 an der Messeinrichtung 5 an, durch den sie am Auswurfbogen 13 entlang verschiebbar ist.

Die Arbeitsmaschine 1 weist außerdem analog zur Arbeitsmaschine aus der Fig. 1 eine Steuereinrichtung 6 und/oder eine Anzeigeeinheit 7 auf. Dabei kann die Anzeigeeinheit 7 zusätzlich zu den Informationen über den Zustand des Flächenelements 32 auch Informationen über den Betrieb der Arbeitsmaschine 1 ihrem Bediener wiedergeben. Diese zusätzlichen Informationen sind beispielsweise eine Fahrgeschwindigkeit der Arbeitsmaschine 1, eine Antriebsdrehzahl der Aggregate 12, 14 und/oder eine Durchflussmenge des Ernteguts 9 durch den Förderkanal 15.

Außerdem ist die Steuereinrichtung 6 dazu eingerichtet, den Aktor 56 zu betätigen, sodass die Position der Messeinrichtung 5 am Auswurfbogen 13 durch die Steuereinrichtung 6 eingestellt werden kann. Zudem kann der Bediener über eine Benutzerschnittstelle der Anzeigeeinheit 7 ein Benutzersignal an die Steuereinrichtung 6 auslösen, die daraufhin die Verschiebung der Messeinrichtung 5 einleitet. Weitergehend ist die Steuereinrichtung 6 dazu vorgesehen, den Betrieb der Aggregate 12, 14 sowie des Einzugs 11 und/oder des Vorsatzes 18 zu steuern, sodass folglich der Förderbetrieb der Fördereinrichtung 3 durch die Steuereinrichtung 6 abhängig oder unabhängig vom Messsignal der Messeinrichtung 5 einstellbar ist.

Abweichend von der in der Fig. 4 gezeigten Ausführungsform, ist auch eine ortsfeste Anordnung der Messeinrichtung 5 am Auswurfbogen 13 als kostengünstige Alternative möglich. Die lageveränderliche Anordnung der Messeinrichtung 5 hat wiederum den Vorteil, dass das von der Messeinrichtung 5 erfassbare Flächenelement 32 einen größeren Teil des Auswurfbogens 13 bildet als bei der ortsfesten Anordnung der Messeinrichtung 5 am Auswurfbogen 13.

Fig. 4 (b) zeigt schematisch die lageveränderliche Anordnung der Messeinrichtung 5, die analog zur Messeinrichtung 5 aus Fig. 3 einem Flächenelement 32 zugeordnet ist, das hier den Auswurfbogen 13 aus Fig. 4 (a) zumindest teilweise ausbildet, und zur Erfassung des Zustands des Flächenelements 32 vorgesehen ist. Zu sehen ist, dass das Flächenelement 32 des Auswurfbogens 13 analog zum Flächenelement 32 aus Fig. 3 eine erste Oberfläche 321 und eine zweite Oberfläche 322 aufweist. Hierbei erfolgt die Erfassung des Zustands des Flächenelements 32 durch die Messeinrichtung 5 analog zur Messeinrichtung 5 aus Fig. 3, das heißt der Sensor 51 der Messeinrichtung 5 erfasst eine Materialmenge des Flächenelements 32 in einer Materialausdehnungsrichtung 53, die sich von der zweiten Oberfläche 322 ausgehend in Richtung vom Sensor 51 weg zur ersten Oberfläche 321 hin erstreckt.

Gezeigt ist weiterhin, dass ein Führungsmittel 57 zur Führung der Messeinrichtung 5 am Auswurfbogen 13 vorgesehen ist. Durch das Führungsmittel 57 ist der Sensorabstand 52 zwischen dem Sensor 51 der Messeinrichtung 5 und zwischen der zweiten Oberfläche 322 definiert. Zudem ist durch das Führungsmittel 57 der Sensorabstand 52 auch bei Verschiebung der Messeinrichtung 5 am Auswurfbogen im Wesentlichen gleichbleibend.

Abweichend zum in der Fig. 4 (b) gezeigten Ausführungsbeispiel kann auch statt einer Gleitführung beispielsweise eine Laufschiene verwendet werden, in der an der Messeinrichtung 5 angebrachte Laufrollen oder Räder geführt sind. Alternativ kann statt eines Aktors 56 zur Verschiebung der Messeinrichtung 5 auch ein Laufwagen vorgesehen sein, der mit dem Führungsmittel 57 im Eingriff ist.

Fig. 4 (c) zeigt analog zur Fig. 4 (a) eine als Erntemaschine 1 ausgebildete mobile Arbeitsmaschine 1, bei der zwei weitere Anwendungen des Erfindungsgedankens durch alternative oder zusätzliche Anordnungen der Messeinrichtung 5 an der Arbeitsmaschine 1 realisiert sind. Dabei weist die gezeigte Arbeitsmaschine 1 analog zur Arbeitsmaschine 1 aus Fig 4 (a), eine Fördereinrichtung 3 mit einem als Förderkanal 15 ausgeführten Förderraum 31, mehrere Bodeneingriffsmittel 4, mindestens eine Messeinrichtung 5 mit jeweils einem Aktor 56, eine Steuereinrichtung 6, eine Anzeigeeinheit 7, ein oder mehrere Aggregate 12, 14, einen Auswurfbogen 13 und/oder einen Vorsatz 18 auf.

In einer ersten der zwei Anwendungen ist die Messeinrichtung 5 einem Flächenelement 32 zugeordnet, das eine Kanalwand 16 des Förderkanals 15 zumindest teilweise ausbildet. Dabei ist die Kanalwand 16 dem Verarbeitungsaggregat 12 in Förderrichtung F1 nachgeordnet und dem Beschleunigungsaggregat 14 vorgeordnet.

In der zweiten der zwei Anordnungen ist die Messeinrichtung 5 einem Flächenelement 32 zugeordnet, das eine Gehäusewand 17 des Beschleunigungsaggregats 14 zumindest teilweise ausbildet.

Die Flächenelemente 32 der Kanalwand 16 und/oder der Gehäusewand 17 sind erwartungsgemäß stark beanspruchte Stellen des Förderkanals 15. Schließlich wird das Erntegut 9 von den Aggregaten 12, 14 beschleunigt und prallt mit hoher Geschwindigkeit an den Innenwänden des Förderkanals 15, das heißt im Wesentlichen an der Kanalwand 16 und/oder an der Gehäusewand 17 auf, wobei es dann an diesen Wänden 16, 17 in die Förderrichtung F1 geführt wird. Insofern entstehen an der Kanalwand 16 und/oder an der Gehäusewand 17 durch das aufprallende und/oder geführte Ernteguts 9 die vorstehend genannten Abnutzungen und/oder Schwachstellen. Die Anordnung der Messeinrichtung 5 an den stark beanspruchten Flächenelementen 32 der Wände 16, 17 ist dahingehend vorteilhaft, da hierdurch der Zustand der Wände 16, 17 überprüfbar ist, und ein Ausfall der Arbeitsmaschine 1 effektiv vermieden werden kann.

Abweichend von dem dargestellten Ausführungsbeispielen ist es auch möglich, ohne den Gedanken der Erfindung einzuschränken, dass eine oder mehrere Messeinrichtungen 5 dem Flächenelement 32 des Auswurfbogens 13, der Kanalwand 16 und/oder der Gehäusewand 17 zugeordnet sind.

## Patentansprüche

1. Komponente für eine mobile Arbeitsmaschine, die folgendes umfasst:
• eine Fördereinrichtung (3) mit einem Fördermittel zum Führen und/oder Fördern von Transportgut (9) in zumindest eine Förderrichtung (F1, F2), und mit einem Förderraum (31), innerhalb dessen das Transportgut (9) in zumindest eine der Förderrichtungen (F1, F2) bewegbar ist;
• ein Flächenelement (32, 33), das den Förderraum (31) zumindest teilweise umgrenzt und eine dem Förderraum (31) zugewandte, erste Oberfläche (321, 331), sowie eine dem Förderraum (31) abgewandte, zweite Oberfläche (322, 332) aufweist, wobei die zweite Oberfläche (322, 332) beabstandet zur ersten Oberfläche (321, 331) angeordnet ist;
• eine Messeinrichtung (5), die der zweiten Oberfläche (322, 332) zugeordnet ist, und die dazu eingerichtet ist, die räumliche Zuordnung der ersten Oberfläche (321, 331) zu der zweiten Oberfläche (322, 332) zu erkennen,
**dadurch gekennzeichnet, dass**
die Messeinrichtung (5) einen Sensor (51) aufweist, der von der zweiten Oberfläche (322, 332) einen definierten Sensorabstand (52) aufweist.

2. Komponente für eine mobile Arbeitsmaschine nach Anspruch 1, **dadurch gekennzeichnet, dass** der Sensor (51) entlang der zweiten Oberfläche (322, 332) lageveränderlich geführt ist.

3. Komponente für eine mobile Arbeitsmaschine nach zumindest einem der vorherigen Ansprüche, **dadurch gekennzeichnet, dass** der Sensor (51) der Messeinrichtung (5) an die zweite Oberfläche (322, 332) andrückbar ausgebildet ist.

4. Komponente für eine mobile Arbeitsmaschine nach zumindest einem der vorherigen Ansprüche, **dadurch gekennzeichnet, dass** der Sensor (51) dazu eingerichtet ist, eine Materialmenge in einer Materialausdehnungsrichtung (53) des Flächenelements (32, 33) zu erfassen, wobei sich die Materialausdehnungsrichtung (53) von der zweiten Oberfläche (322, 332) aus zur ersten Oberfläche (321, 331) hin und vom Sensor (51) weg erstreckt.

5. Komponente für eine mobile Arbeitsmaschine nach zumindest einem der vorherigen Ansprüche, **dadurch gekennzeichnet, dass** das Flächenelement (32, 33) an der zweiten Oberfläche (322, 332) durch den Sensor (51) mit Schallwellen beaufschlagbar ist, sodass dadurch eine Erkennung des Abstands zwischen der ersten Oberfläche (321, 331) und der zweiten Oberfläche (322, 332) erreichbar ist.

6. Komponente für eine mobile Arbeitsmaschine nach zumindest einem der vorherigen Ansprüche, **dadurch gekennzeichnet, dass** der Sensor (51) als ein elektromagnetisch-akustischer Wandler ausgebildet ist.

7. Komponente für eine mobile Arbeitsmaschine nach zumindest einem der vorherigen Ansprüche, **dadurch gekennzeichnet, dass** sie eine Steuereinrichtung (6) aufweist, die zum Empfang und/oder zur Verarbeitung eines Messsignals der Messeinrichtung (5) vorgesehen ist.

8. Komponente für eine mobile Arbeitsmaschine nach Anspruch 7, **dadurch gekennzeichnet, dass** die Steuereinrichtung (6) zum Senden eines Steuersignals und/oder eines Anzeigesignals an eine Anzeigeeinheit (7) vorgesehen ist.

9. Komponente für eine mobile Arbeitsmaschine nach zumindest einem der Ansprüche 7 oder 8, **dadurch gekennzeichnet, dass** die Steuereinrichtung (6) dazu eingerichtet ist, bei Unterschreitung eines kritischen Abstands zwischen der ersten Oberfläche (321, 331) und der zweiten Oberfläche (322, 332) ein Warnsignal auszugeben.

10. Transportfahrzeug (21) mit einem Transportbehälter (22), wobei dieser einen Förderraum (24, 31) und eine Bodenwand (23), die zum Be- oder Entladen des Transportbehälters (22) eingerichtet ist, aufweist, **dadurch gekennzeichnet, dass** das Transportfahrzeug (21) eine Komponente nach einem der vorherigen Ansprüche umfasst.

11. Transportfahrzeug (21) nach Anspruch 10, **dadurch gekennzeichnet, dass** die Bodenwand (23) eine aus Schiebebodenprofilen (231, 232, 233) gebildete Fördereinrichtung (3) umfasst, wobei die Schiebebodenprofile (231, 232, 233) in Förderrichtung (F2) translatorisch angetrieben sind.

12. Transportfahrzeug (21) nach Anspruch 11, **dadurch gekennzeichnet, dass** eines der Schiebebodenprofile (231, 232, 233) das Flächenelement (33) ausbildet, dessen erste Oberfläche (331) dem Förderraum (24, 31) zugewandt ist.

13. Mobile Arbeitsmaschine (2), die als eine Kombination aus einem Zugfahrzeug (26) und einem Transportfahrzeug gebildet ist, wobei das Zugfahrzeug (26) einen Fahrantrieb zum Antreiben von Bodeneingriffsmitteln (4) aufweist, **dadurch gekennzeichnet, dass** das Transportfahrzeug (21) nach einem der Ansprüche 10 bis 12 ausgeführt ist.

14. Mobile Arbeitsmaschine (1), die als eine Erntemaschine (1) ausgebildet ist und einen Fahrantrieb zum Antreiben von Bodeneingriffsmitteln (4) aufweist, wobei die Fördereinrichtung (3) einem Verarbeitungsaggregat (12) zur Zerkleinerung von Erntegut (9) in Förderrichtung (F1) nachgeordnet ist und die Fördereinrichtung (3) einen Auswurfbogen (13) zur Überführung des Transportguts (9) auf ein Transportfahrzeug umfasst, **dadurch gekennzeichnet, dass** die Erntemaschine (1) eine Komponente nach zumindest einem der Ansprüche 1- 9 aufweist, wobei der Auswurfbogen (13) das Flächenelement (32) aufweist.

## Claims

1. Component for a mobile work machine, comprising:
• a conveyor device (3) having a conveying means for guiding and/or conveying goods (9) to be transported in at least one conveying direction (F1, F2), and having a conveying chamber (31) within which the goods (9) to be transported can be moved in at least one of the conveying directions (F1, F2);
• a surface element (32, 33) which at least partially surrounds the conveying chamber (31) and has a first surface (321, 331) facing the conveying chamber (31) and a second surface (322, 332) facing away from the conveying chamber (31), wherein the second surface (322, 332) is spaced apart from the first surface (321, 331);
• a measuring device (5) which is assigned to the second surface (322, 332) and is designed to detect the spatial correspondence between the first surface (321, 331) and the second surface (322, 332),
**characterized in that**
the measuring device (5) has a sensor (51) which is at a defined sensor distance (52) from the second surface (322, 332).

2. Component for a mobile work machine according to claim 1, **characterized in that** the sensor (51) is guided in a positionally variable manner along the second surface (322, 332).

3. Component for a mobile work machine according to at least one of the preceding claims, **characterized in that** the sensor (51) of the measuring device (5) is designed to be pressed against the second surface (322, 332).

4. Component for a mobile work machine according to at least one of the preceding claims, **characterized in that** the sensor (51) is configured to detect a quantity of material in a material expansion direction (53) of the surface element (32, 33), wherein the material expansion direction (53) extends from the second surface (322, 332) toward the first surface (321, 331) and away from the sensor (51).

5. Component for a mobile work machine according to at least one of the preceding claims, **characterized in that** the sensor (51) can apply sound waves to the surface element (32, 33) on the second surface (322, 332) so that detection of the distance between the first surface (321, 331) and the second surface (322, 332) can be achieved thereby.

6. Component for a mobile work machine according to at least one of the preceding claims, **characterized in that** the sensor (51) is designed as an electromagnetic-acoustic transducer.

7. Component for a mobile work machine according to at least one of the preceding claims, **characterized in that** it has a control device (6) which is provided for receiving and/or processing a measurement signal from the measuring device (5).

8. Component for a mobile work machine according to claim 7, **characterized in that** the control device (6) is provided for transmitting a control signal and/or a display signal to a display unit (7).

9. Component for a mobile work machine according to at least one of claims 7 or 8, **characterized in that** the control device (6) is designed to emit a warning signal if a critical distance between the first surface (321, 331) and the second surface (322, 332) is undershot.

10. Transport vehicle (21) comprising a transport container (22), wherein the transport container has a conveying space (24, 31) and a bottom wall (23) which is designed for loading or unloading the transport container (22), **characterized in that** the transport vehicle (21) comprises a component according to any of the preceding claims.

11. Transport vehicle (21) according to claim 10, **characterized in that** the bottom wall (23) comprises a conveyor device (3) formed by sliding floor profiles (231, 232, 233), wherein the sliding floor profiles (231, 232, 233) are driven translationally in the conveying direction (F2).

12. Transport vehicle (21) according to claim 11, **characterized in that** one of the sliding floor profiles (231, 232, 233) forms the surface element (33), the first surface (331) of which faces the conveying space (24, 31).

13. Mobile work machine (2) which is formed as a combination of a towing vehicle (26) and a transport vehicle, wherein the towing vehicle (26) has a travel drive for driving ground engagement means (4), **characterized in that** the transport vehicle (21) is designed according to any of claims 10 to 12.

14. Mobile working machine (1) which is designed as a harvesting machine (1) and has a travel drive for driving ground engagement means (4), wherein the conveyor device (3) is arranged in the conveying direction (F1) downstream of a processing unit (12) for chopping harvested material (9) and the conveyor device (3) comprises an ejection outlet (13) for transferring the material (9) to be transported to a transport vehicle, **characterized in that** the harvesting machine (1) comprises a component according to at least one of claims 1-9, wherein the ejection outlet (13) comprises the surface element (32).

## Revendications

1. Composant de machine mobile comprenant :
* une installation de transfert (3) munie d'un moyen de transfert pour guider et/ou transférer des produits (9) dans au moins une direction de transfert (F1, F2) et un espace de transfert (31) dans lequel le produit à transférer (9) est déplacé dans au moins l'une des directions de transfert (F1, F2),
- un élément de surface (32, 33) qui entoure au moins partiellement le volume de transfert (31) et a une première surface (321, 331) tournée vers le volume de transfert (31) tourné vers le volume de transfert (31) ainsi qu'une seconde surface (322, 332) non tournée vers le volume de transfert (31), la seconde surface (322, 332) étant écartée de la première surface (321, 331),
* une installation de mesure (5) associée à la seconde surface (322, 332) et qui est conçue pour reconnaître l'association dans l'espace de la première surface (321, 331) et la seconde surface (322, 332),
composant **caractérisé en ce que**
l'installation de mesure (5) comporte un capteur (51) qui est à une distance de capteur définie (52) par rapport à la seconde surface (322, 332).

2. Composant de machine mobile selon la revendication 1,
**caractérisé en ce que**
le capteur (51) est guidé de manière variable en position le long de la seconde surface (322, 332).

3. Composant de machine mobile selon l'une des revendications précédentes,
**caractérisé en ce que**
le capteur (51) de l'installation de mesure (5) est réalisé de façon à être appliqué contre la seconde surface (322, 332).

4. Composant de machine mobile selon au moins l'une des revendications précédentes,
**caractérisé en ce que**
le capteur (51) est conçu pour saisir la quantité de matière dans la direction d'extension (53) de la matière de l'élément de surface (32, 33), l'installation d'extension (53) s'étend de la seconde surface (322, 332) vers la première surface (321, 331) en s'éloignant du capteur (51).

5. Composant de machine mobile selon l'une des revendications précédentes,
**caractérisé en ce que**
l'élément de surface (32, 33) sur la seconde surface (322, 332) est exposé aux ondes sonores par le capteur (51) de façon à permettre ainsi de détecter la distance entre la première surface (321, 331) et la seconde surface (322, 332).

6. Composant de machine mobile selon au moins l'une des revendications précédentes,
**caractérisé en ce que**
le capteur (51) est un transducteur acoustique électromagnétique.

7. Composant de machine mobile selon au moins l'une des revendications précédentes,
**caractérisé en ce qu'**il comporte
une installation de commande (6) pour recevoir et/ou traiter le signal de mesure de l'installation de mesure (5).

8. Composant de machine mobile selon la revendication 7,
**caractérisé en ce que**
l'installation de commande (6) est prévue pour émettre un signal de commande et/ou un signal d'affichage à l'unité d'affichage (7).

9. Composant de machine mobile selon au moins l'une des revendications 7 ou 8,
**caractérisé en ce que**
l'installation de commande (6) est conçue pour émettre un signal avertisseur lors du dépassement vers le bas d'une distance critique entre la première surface (321, 331) et la seconde surface (322, 332).

10. Véhicule de transport (21) comportant un réceptacle de transport (22), avec un volume de transfert (24, 31) et un fond (23) pour charger et/ou décharger le réceptacle de transport (22),
véhicule de transport (21),
**caractérisé en ce qu'**il comprend un composant selon l'une des revendications précédentes.

11. Véhicule de transport (21) selon la revendication 10,
**caractérisé en ce que**
le fond (23) a une installation de transfert (3) formée de profilés de fond coulissant (231, 232, 233), les profilés de fond coulissant (231, 232, 233), étant entraînés en translation dans la direction de transfert (F2).

12. Véhicule de transport (21) selon la revendication 11,
**caractérisé en ce que**
l'un des profilés de fond coulissant (231, 232, 233) forment l'élément de surface (33) dont le dessus (331) est tourné vers le volume de transfert (24, 31).

13. Machine (2) combinaison d'un tracteur (26) et d'un véhicule de transport, le véhicule de transport (26) ayant un entraînement pour entraîner des moyens de prise de fond (4),
**caractérisée en ce que**
le véhicule de transport (21) est réalisé selon l'une des revendications 10 à 12.

14. Machine mobile (1) en forme de récolteuse (1) et ayant un entraînement de circulation pour entraîner des moyens de prise de sol (4), l'installation de transfert (3) a un module de traitement (12) pour réduire le produit récolté (9) en aval dans le sens de transfert (F1) et l'installation de transfert (3) a une goulotte d'éjection (13) pour faire passer le produit transporté (9) sur un véhicule de transport,
**caractérisée en ce que**
la machine de récolte (1) a un composant selon l'une des revendications 1 à 9,
la courbe d'éjection (13) comprenant l'élément de surface (32).
